# EUROPÄISCHE PATENTSCHRIFT

(11) **EP 0 771 178 B1**
(45) Veröffentlichungstag und Bekanntmachung des Hinweises auf die Patenterteilung: **24.07.2002**
(21) Anmeldenummer: 96907472.3
(22) Anmeldetag: 14.03.1996
(51) Int. Cl.: A61C 17/16

(54) **ELEKTRISCH BETRIEBENES ZAHNREINIGUNGSGERÄT**
ELECTRICALLY OPERATED TOOTH-CLEANING DEVICE
APPAREIL ELECTRIQUE DE NETTOYAGE DES DENTS

(30) Priorität: 02.05.1995 DE 19515984
(43) Veröffentlichungstag der Anmeldung: 07.05.1997
(73) Patentinhaber: Braun GmbH, Kronberg (DE)
(72) Erfinder: BOLAND, Bernhard, D-60385 Frankfurt am Main (DE); HACZEK, Werner, D-65510 Idstein (DE)
(86) Internationale Anmeldenummer: EP9601096
(87) Internationale Veröffentlichungsnummer: WO9634577

(56) Entgegenhaltungen:
- WO-A-91/07117
- US-A- 1 380 633

## Beschreibung

Die Erfindung betrifft ein insbesondere elektrisch beriebenes Zahnreinigungsgerät nach den Merkmalen des Oberbegriffs des Patentanspruchs 1.

Ein derartiges Zahnreinigungsgerät ist aus der deutschen Offenlegungsschrift DE 43 09 078 A1 bekannt. Der Offenbarungsgehalt dieser Druckschrift wird durch ausdrücklichen Verweis in die vorliegende Anmeldung aufgenommen. Dort ist ein Zahnreinigungsgerät beschrieben, bei dem ein Aufsatzteil auf ein Griffteil aufgesteckt werden kann. In dem Aufsatzteil ist ein längliches, dünnes und flexibles Reinigungswerkzeug verschiebbar untergebracht, das zur Zahnreinigung geeignet ist. An dem Griffteil ist ein Schalter angebracht, mit dem das Zahnreinigungsgerät ein- und ausgeschaltet werden kann. Verschiebt ein Benutzer den Schalter gegen die Kraft einer Feder in Richtung zum Aufsatzteil hin, so wird das Reinigungswerkzeug in eine Rotation um eine Längsachse versetzt. Des weiteren wird durch das Verschieben erreicht, daß das Reinigungswerkzeug aus dem Aufsatzteil herausgeschoben wird. Der Benutzer kann nunmehr mit Hilfe des rotierenden Reinigungswerkzeugs insbesondere die Interdentalräume zwischen seinen Zähnen reinigen. Läßt der Benutzer den Schalter wieder los, so wird das Reinigungswerkzeug durch die Kraft der Feder in das Aufsatzteil zurückgeschoben und der das Reinigungswerkzeug antreibende Motor wird ausgeschaltet. Nach Gebrauch kann der Benutzer das Aufsatzteil vom Griffteil abziehen. Damit ist es möglich, daß derselbe Benutzer ein Aufsatzteil mit einem unverbrauchten Reinigungswerkzeug zur weiteren Reinigung seiner Zähne aufsteckt, oder daß ein anderer Benutzer das Zahnreinigungsgerät mit einem anderen Aufsatzteil benutzt.

Aufgabe der Erfindung ist es, den Wechsel des Aufsatzteils und damit des Reinigungswerkzeugs zu verbessern, insbesondere im Hinblick auf eine Benutzung des Zahnreinigungsgeräts durch mehrere Benutzer.

Diese Aufgabe wird bei dem Zahnreinigungsgerät der eingangs genannten Art erfindungsgemäß im wesentlichen durch die Merkmale des Patentanspruchs 1 gelöst.

Durch das benutzerbezogene Element, insbesondere ein Rohr oder dergleichen wird eine Verwechslung von Aufsatzteilen und damit Reinigungswerkzeugen verschiedener Benutzer sicher vermieden. Damit ist die Voraussetzung gegeben, daß das erfindungsgemäße Zahnreinigungsgerät von mehreren Benutzern verwendet werden kann, ohne daß dies hygienische Unzulänglichkeiten mit sich bringt. Durch das personenbezogene Rohr kann das Zahnreinigungsgerät bzw. das Aufsatzteil einem bestimmten Benutzer zugeordnet werden.

Des weiteren ist durch die Kopplung des Aufsatzteils mit dem Element gewährleistet, daß das Aufsatzteil immer zusammen mit dem Rohr abgezogen wird. Damit werden Verwechslungen sicher vermieden, da das benutzerbezogene Element nicht alleine von dem Griffteil abgezogen werden kann, und somit das Aufsatzteil üblicherweise nicht ohne das benutzerbezogene Element sich auf dem Griffteil befinden kann.

Durch die Trennung von Aufsatzteil und benutzerbezogenem Element ist es jedoch möglich, daß der Benutzer das Aufsatzteil abzieht und beispielsweise durch ein anderes Aufsatzteil mit einem unverbrauchtem Reinigungswerkzeug austauscht, ohne daß es erforderlich ist, gleichzeitig auch das personenbezogene Rohr abzuziehen.

Insgesamt ermöglicht somit die Erfindung das Abziehen des Aufsatzteils zusammen mit dem benutzerbezogenen Element bei einem Benutzerwechsel sowie auch das Abziehen nur des Aufsatzteils alleine bei einem Austausch des Reinigungswerkzeugs ohne Benutzerwechsel. Für die Benutzer ist damit die Handhabung des Zahnreinigungsgeräts bei einem Wechsel des Reinigungswerkzeugs wesentlich verbessert, wobei gleichzeitig die Verwechslung von Reinigungswerkzeugen verschiedener Benutzer sicher vermieden wird.

Bei einer Weiterbildung der Erfindung nach dem Patentanspruch 2 wird das Aufstecken des personenbezogenen Rohrs auf das Griffteil durch einander zugeordnete Rastmittel erreicht. Bei einer insbesondere hinsichtlich der Herstllung und der Kosten besonders vorteilhaften Ausgestaltung der Erfindung nach dem Patentanspruch 3 werden die Rastmittel durch eine Rastnut im Griffteil und einen zugeordneten Zapfen des Rohrs gebildet.

Bei einer Weiterbildung der Erfindung nach dem Patentanspruch 4 wird das Aufstecken des Aufsatzteils auf das Griffteil durch einander zugeordnete Rastmittel erreicht. Bei einer insbesondere hinsichtlich der Herstellung und der Kosten besonders vorteilhaften Ausgestaltung der Erfindung nach dem Patentanspruch 5 werden die Rastmittel durch eine Rastnut im Griffteil und einen zugeordneten Zapfen des Aufsatzteils gebildet. Dabei ist es besonders zweckmäßig, wenn die Rastnut nach dem Patentanspruch 3 und die Rastnut nach dem Patentanspruch 5 als eine gemeinsame Rastnut ausgebildet sind.

Bei einer Weiterbildung nach dem Patentanspruch 6 sind zur Kopplung des Aufsatzteils und des personenbezogenen Rohrs einander zugeordnete Koppelmittel vorgesehen. Besonders vorteilhaft ist es, entsprechend dem Patentanspruch 7 als Koppelmittel eine Ausnehmung in dem Rohr und eine von dem Aufsatzteil abstehende Nase vorzusehen. Dies stellt wiederum eine insbesondere im Hinblick auf Herstellung und Kosten besonders vorteilhafte Ausgestaltung der Erfindung dar.

Besonders zweckmäßig ist es, entsprechend dem Patentanspruch 8 eine insbesondere metallene Hülse vorzusehen, die die Rastnut für das personenbezogene Rohr und die Rastnut für das Aufsatzteil aufnimmt. Dadurch wird auf einfache Weise eine weitere Verbesserung der Rastung zwischen dem personenbezogenen Rohr, dem Aufsatzteil und dem Griffteil erreicht.

Die Erfindung betrifft auch ein Aufsatzteil für ein insbesondere elektrisch betriebenes Zahnreinigungsgerät nach dem Patentanspruch 9. Bei einem derartigen Aufsatzteil sind in entsprechender Weise alle Vorteile vorhanden, wie sie im Zusammenhang mit einem Zahnreinigungsgerät nach dem Patentanspruch 1 bereits erläutert worden sind. Des weiteren sind alle vorteilhaften Weiterbildungen und Ausgestaltungen, wie sie in den Patentansprüchen 2 bis 8 enthalten und ebenfalls bereits erläutert worden sind, ebenfalls bei einem Aufsatzteil nach dem Patentanspruch 9 möglich. Ein Aufsatzteil gemäß dem Oberbegriff des Anspruchs 9 ist beispielsweise aus der WO 91/07117 A oder der DE 43 09 078 A bekannt.

Die Erfindung betrifft auch ein Verfahren zum Abziehen eines personenbezogenen Rohrs von einem insbesondere elektrisch betriebenen Zahnreinigungsgeräts. Dabei ist das Rohr mit einem Aufsatzteil gekoppelt und beide sind auf ein Griffteil des Zahnreinigungsgeräts aufgesteckt. In dem Aufsatzteil ist ein längliches Reinigungswerkzeug untergebracht, das in eine Rotation um seine Längsachse versetzbar ist. Erfindungsgemäß sind Koppelmittel vorgesehen, mit deren Hilfe beim Abziehen des Rohrs durch einen Benutzer automatisch auch das Aufsatzteil abgezogen wird. Bei diesen Koppelmitteln handelt es sich vorzugsweise um eine Nase, die von dem Aufsatzteil nach außen absteht, und die in eine Ausnehmung des personenbezogenen Rohrs eingreift. Dadurch wird unter anderem erreicht, daß das personenbezogene Rohr üblicherweise nicht ohne das Aufsatzteil von dem Griffteil abgezogen werden kann. Es ist somit nicht möglich, daß ein Aufsatzteil mit einem darin enthaltenen Reinigungswerkzeug ohne eine Zuordnung zu einem bestimmten Benutzer auf das Griffteil des Zahnreinigungsgeräts aufgesteckt ist.

Weitere Merkmale, Vorteile und Anwendungsmöglichkeiten der Erfindung ergeben sich aus der nachfolgenden Beschreibung von Ausführungsbeispielen, die in der Zeichnung näher dargestellt sind. Dabei bilden alle beschriebenen und/oder dargestellten Merkmale für sich oder in beliebiger Kombination den Gegenstand der Erfindung, unabhängig von ihrer Zusammenfassung in den Ansprüchen und deren Rückbeziehung.
- Fig. 1: zeigt eine schematische Darstellung eines Griffteils eines elektrisch betriebenen Zahnreinigungsgeräts mit aufgestecktem personenbezogenen Rohr und aufgestecktem Aufsatzteil in einem Längsschnitt,
- Fig. 2: zeigt eine schematische Darstellung einer Hülse mit Rastmitteln zum Aufstecken des personenbezogenen Rohrs und des Aufsatzteils der Fig. 1,
- Fig. 3: zeigt eine schematische Darstellung des personenbezogenen Rohrs mit aufgestecktem Aufsatzteil, und
- Fig. 4: zeigt eine schematische Darstellung der Hülse und des Aufsatzteils ohne das personenbezogene Rohr.

In der deutschen Offenlegungsschrift DE 43 09 078 A1 ist ein elektrisch betriebenes Zahnreinigungsgerät beschrieben, das in seiner Gesamtheit, wie auch im Hinblick auf seine einzelnen Merkmale hiermit durch ausdrückliche Bezugnahme in den Offenbarungsgehalt der vorliegenden Patentanmeldung aufgenommen wird. Dieses Zahnreinigungsgerät stellt im wesentlichen die Grundlage dar für das nachfolgend beschriebene Ausführungsbeispiel eines erfindungsgemäßen Zahnreinigungsgeräts.

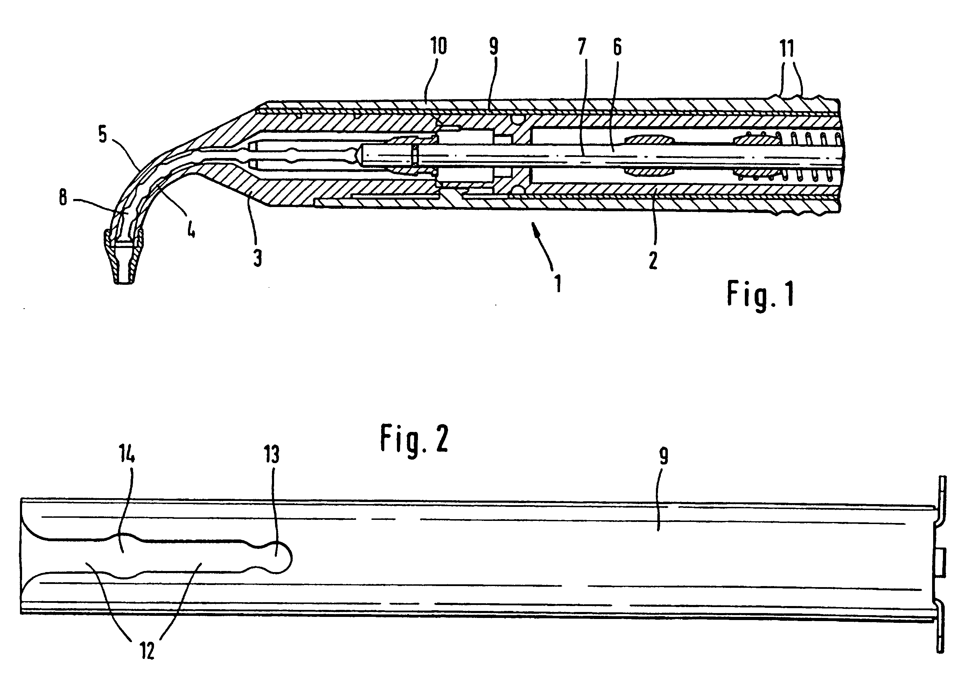

Fig. 1 zeigt ein Zahnreinigungsgerät 1, das aus einem Griffteil 2 und einem aufgesteckten Aufsatzteil 3 zusammengesetzt ist. Das Griffteil 2 ist länglich ausgebildet und besitzt einen kreisförmigen Querschnitt. Das Aufsatzteil 3 ist ebenfalls im wesentlichen länglich ausgebildet und besitzt einen dem Griffteil 2 angepaßten kreisförmigen Querschnitt. Eine dem Griffteil abgewandte Führungsröhre 4 des Aufsatzteils 3 besitzt einen kleineren Durchmesser und ist mit einer Biegung 5 versehen.

In dem Griffteil 2 ist eine Welle 6 in Richtung einer Längsachse 7 drehbar gelagert untergebracht. Die Welle 6 ist mit einem länglichen, dünnen und flexiblen Reinigungswerkzeug 8 drehfest gekoppelt, das in der Führungsröhre 4 des Aufsatzteils 3 untergebracht ist.

Dies hat zur Folge, daß, falls die Welle 6 beispielsweise von einem elektrischen Antrieb in eine Rotation um die Längsachse 7 versetzt wird, auch das Reinigungswerkzeug 8 eine Rotation um die Längsachse 7 ausführt. Aufgrund der Flexibilität des Reinigungswerkzeugs 8 wird diese Rotation auch im Bereich der Biegung 5 der Führungsröhre 4 aufrechterhalten. Wird des weiteren die Welle 6 in Richtung der Längsachse 7 zum Aufsatzteil 3 hin verschoben, so hat dies zur Folge, daß das Reinigungswerkzeug 8 aus der Führungsröhre 4 herausgeschoben wird. Ein Benutzer kann nunmehr das aus dem Aufsatzteil 3 herausstehende und rotierende Reinigungswerkzeug 7 zur Reinigung seiner Zähne, insbesondere seiner Interdentalräume benutzen.

Die Außendurchmesser des Griffteils 2 und des Aufsatzteils 3 sind in ihrem einander zugewandten Bereich etwa gleich groß. Auf das Griffteil 2 ist eine Hülse 9 aufgesteckt, die auf der dem Aufsatzteil 3 zugewandten Seite über das Griffteil 2 übersteht. Die Hülse 9 ist länglich ausgebildet, weist einen kreisförmigen Querschnitt auf und ist aus Metall hergestellt. Die Hülse 9 ist fest mit dem Griffteil 2 verbunden, beispielsweise durch einen Preßsitz. In den überstehenden Teil der Hülse 9 ist das Aufsatzteil 3 mit Hilfe von Rastmitteln lösbar eingesteckt. Das Aufsatzteil 3 kann also vom Griffteil 2 abgezogen und wieder rastbar aufgesteckt werden.

Auf die Hülse 9 ist ein Rohr 10 aufgesteckt, das sich in Richtung der Längsachse 7 vom Griffteil 2 bis zum Aufsatzteil 3 erstreckt und insbesondere den Bereich der Verbindung des Griffteils 2 und des Aufsatzteils 3 bedeckt. Das Rohr 10 ist länglich ausgebildet, weist einen kreisförmigen Querschnitt auf und ist aus Kunststoff hergestellt. Das Rohr 10 ist mit Hilfe von Rastmitteln lösbar mit der Hülse 9 verbunden. Das Rohr 10 kann also von der Hülse 9 abgezogen und wieder rastbar aufgesteckt werden.

Das Rohr 10 weist Mittel auf, mit deren Hilfe es einem bestimmten Benutzer zugeordnet werden kann, beispielsweise Farbringe 11 oder dergleichen. Das Rohr 10 ist somit personenbezogen.

Fig. 2 zeigt die Hülse 9 mit den Rastmitteln zum Aufstecken des personenbezogenen Rohrs 10 und zum Einstecken des Aufsatzteils 3. Bei diesen Rastmitteln handelt es sich um eine Rastnut 12, die aus zwei Bereichen 13, 14 zusammengesetzt ist. Der erste Bereich 13 ist dem Rohr 10 zugeordnet und der zweite Bereich 14 dem Aufsatzteil 3. Dies bedeutet, daß der erste Bereich 13 dem Einrasten des Rohrs 10 dient und der zweite Bereich 14 dem Einrasten des Aufsatzteils 3.

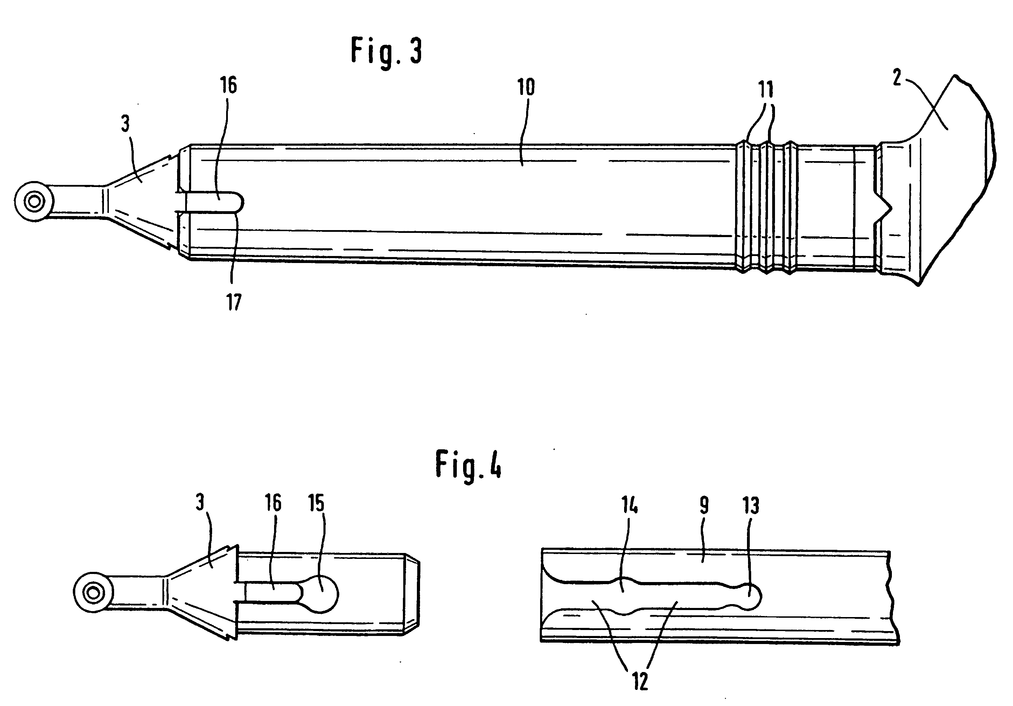

Aus den Fign. 3 und 4 ergibt sich die Rastung des Rohrs 10 und des Aufsatzteils 3 mit der Hülse 9 und damit mit dem Griffteil 2 des Zahnreinigungsgeräts 1.

An der Innenseite des Rohrs 10 ist in nicht näher dargestellter Weise ein Zapfen vorgesehen, der nach innen in das Rohr 10 absteht. Dieser Zapfen ist hinsichtlich seiner Größe und Form an den ersten Bereich 13 der Rastnut 12 der Hülse 9 angepaßt. Wird somit das Rohr 10 auf die Hülse 9 aufgeschoben, so wird der Zapfen in die Rastnut 12 eingeführt und es ergibt sich eine Rastung des Zapfens im ersten Bereich 13 der Rastnut 12. Das personenbezogene Rohr 10 ist somit auf der Hülse 9 und damit auf dem Griffteil 2 lösbar eingerastet. Ein Verdrehen des Rohrs 10 auf der Hülse 9 ist nicht mehr möglich.

An der Außenseite des Aufsatzteils 3 ist ein Zapfen 15 vorgesehen, der außen von dem Aufsatzteil 3 absteht. Der Zapfen 15 ist hinsichtlich seiner Größe und Form an den zweiten Bereich 14 der Rastnut 12 der Hülse 9 angepaßt. Dies ergibt sich insbesondere aus der Fig. 4, in der das personenbezogene Rohr 10 nicht dargestellt ist.

Wird nunmehr das Aufsatzteil 3 in die Hülse 9 eingeschoben, so wird der Zapfen 15 in die Rastnut 12 eingeführt und es ergibt sich eine Rastung des Zapfens 15 im zweiten Bereich 14 der Rastnut 12. Das Aufsatzteil 3 ist somit in der Hülse 9 und damit in dem Griffteil 2 lösbar eingerastet. Ein Verdrehen des Aufsatzteils 3 in der Hülse 9 ist nicht mehr möglich.

An der Außenseite des Aufsatzteils 3 ist des weiteren eine Nase 16 vorgesehen, der außen an dem Aufsatzteil 3 absteht. Entsprechend der Fig. 4 ist die Nase 16 in unmittelbarer Nachbarschaft zu dem Zapfen 15 angeordnet. In dem personenbezogenen Rohr 10 ist eine Ausnehmung 17 vorgesehen, wobei die Nase 16 und die Ausnehmung 17 in Form und Größe aufeinander abgestimmt sind. Wird das Aufsatzteil 3 in die Hülse 9 eingeschoben, so wird die Nase 16 in die Ausnehmung 17 eingeführt. Damit sind das Aufsatzteil 3 und das Rohr 10 mit Hilfe der als Koppelmittel wirkenden Nase 16 und Ausnehmung 17 miteinander gekoppelt.

Fig. 3 zeigt das Aufsatzteil 3 und das personenbezogene Rohr 10 in dem auf die Hülse 9 und damit auf das Griffteil 2 aufgesteckten Zustand.

Davon ausgehend kann der Benutzer nur das Aufsatzteil 3 mit dem Reinigungswerkzeug 8 aus der Hülse 9 heraus und damit von dem Griffteil 2 abziehen, wobei in diesem Fall das personenbezogene Rohr 10 auf dem Griffteil 2 verbleibt. Das Zahnreinigungsgerät 1 ist somit durch das personenbezogene Rohr 10 trotz fehlendem Aufsatzteil 3 einem bestimmten Benutzer zugeordnet. Dieser Benutzer kann nunmehr entweder ein neues oder anderes Aufsatzteil 3 mit beispielsweise einem unbenutzten Reinigungswerkzeug 8 auf das Griffteil 2 aufstecken und das Zahnreinigungsgerät 1 weiterbenutzen oder das personenbezogene Rohr 10 separat von der Hülse 9 und damit vom Griffteil 2 abziehen und dadurch das Zahnreinigungsgerät 1 von der Zuordnung zu einem bestimmten Benutzer befreien.

In dem zuletzt genannten Fall kann ein anderer Benutzer nunmehr sein personenbezogenes Rohr 10 entweder separat oder zusammen mit seinem Aufsatzteil 3 auf das Griffteil 2 aufstecken und somit das Zahnreinigungsgerät 1 für sich in Anspruch nehmen und benutzen.

Eine weitere Möglichkeit besteht darin, daß ein Benutzer nach Benutzung des Zahnreinigungsgeräts 1 nicht nur das Aufsatzteil 3 separat, sondern sofort auch das personenbezogene Rohr 10 vom Griffteil 2 abzieht, daß also der Benutzer das Zahnreinigungsgerät 1 sofort von der Zurodnung zu einem bestimmten Benutzer befreit. Dies ist dadurch möglich, daß der Benutzer das Rohr 10 von der Hülse 9 und damit von dem Griffteil 2 abzieht. Durch die in die Ausnehmung 17 des Rohrs 10 eingreifende Nase 16 des Aufsatzteils 3 hat dieses Abziehen des Rohrs 10 zur Folge, daß das Aufsatzteil 3 ebenfalls zusammen mit dem Rohr 10 von dem Griffteil 2 abgezogen wird. Das Aufsatzteil 3 steckt nach dem Abziehen vom Griffteil 2 noch in dem personenbezogenen Rohr 10 und kann dann aus diesem herausgezogen werden.

## Patentansprüche

1. Zahnreinigungsgerät (1), mit einem abnehmbaren Aufsatzteil (3), das auf ein Griffteil (2) aufsteckbar ist, wobei in dem Aufsatzteil (3) ein längliches Reinigungswerkzeug (8) untergebracht und in eine Rotation um seine Längsachse (7) versetzbar ist, **dadurch gekennzeichnet, daß** ein benutzerbezogenes Element, wie ein Rohr (10), eine Hülse oder dergleichen, vorgesehen ist, das auf das Griffteil (2) aufsteckbar und mit dem Aufsatzteil (3) koppelbar ist.

2. Zahnreinigungsgerät (1) nach Anspruch 1, **dadurch gekennzeichnet, daß** das Griffteil (2) und das Element einander zugeordnete Rastmittel aufweisen.

3. Zahnreinigungsgerät (1) nach Anspruch 1 oder 2, **dadurch gekennzeichnet, daß** das Griffteil (2) eine Rastnut (13) aufweist, in die ein nach innen abstehender Zapfen des Elements einrastbar ist.

4. Zahnreinigungsgerät (1) nach einem der vorhergehenden Ansprüche, **dadurch gekennzeichnet, daß** das Griffteil (2) und das Aufsatzteil (3) einander zugeordnete Rastmittel aufweisen.

5. Zahnreinigungsgerät (1) nach einem der vorhergehenden Ansprüche, **dadurch gekennzeichnet, daß** das Griffteil (2) eine Rastnut (14) aufweist, in die ein nach außen abstehender Zapfen (15) des Aufsatzteils (3) einrastbar ist.

6. Zahnreinigungsgerät (1) nach einem der vorhergehenden Ansprüche, **dadurch gekennzeichnet, daß** das Element und das Aufsatzteil (3) einander zugeordnete Koppelmittel aufweisen.

7. Zahnreinigungsgerät (1) nach einem der vorhergehenden Ansprüche, **dadurch gekennzeichnet, daß** das Element eine Ausnehmung (17) aufweist, in die eine nach außen abstehende Nase (16) des Aufsatzteils (3) einführbar ist.

8. Zahnreinigungsgerät (1) nach einem der vorhergehenden Ansprüche, **dadurch gekennzeichnet, daß** das Griffteil (2) eine Hülse (9), die insbesondere aus Metall besteht, aufweist, auf die das Element und das Aufsatzteil (3) aufsteckbar sind.

9. Abnehmbares Aufsatzteil (3) für ein, insbesondere elektrisch betriebenes, Zahnreinigungsgerät (1), wobei das Aufsatzteil (3) auf ein Griffteil (2) des Zahnreinigungsgeräts (1) aufsteckbar ist, und wobei in dem Aufsatzteil (1) ein längliches Reinigungswerkzeug (8) untergebracht ist, das in eine Rotation um seine Längsachse (7) versetzbar ist, in Kombination mit einem benutzerbezogenen Element, wie ein Rohr (10), eine Hülse oder dergleichen, das auf das Griffteil (2) aufgesteckt und mit dem Aufsatzteil (3) gekoppelt ist.

10. Aufsatzteil (3) nach Patentanspruch 9, **gekennzeichnet durch** mindestens eines oder mehrere der Merkmale der Patentansprüche 2 bis 8.

11. Verfahren zum Abnehmen eines benutzerbezogenen Elementes, wie ein Rohr (10), eine Hülse oder dergleichen eines, insbesondere elektrisch betriebenen, Zahnreinigungsgeräts (1), wobei das Element mit einem Aufsatzteil (3) koppelbar und auf ein Griffteil (2) des Zahnreinigungsgeräts (1) aufsteckbar sind und in dem Aufsatzteil (3) ein längliches Reinigungswerkzeug (8) untergebracht ist, das in eine Rotation um seine Längsachse (7) versetzbar ist, **dadurch gekennzeichnet, daß** beim Abziehen des Elements durch einen Benutzer mit Hilfe von Koppelmitteln auch das Aufsatzteil (3) selbsttätig abgenommen wird.

12. Verfahren nach Patentanspruch 11, **dadurch gekennzeichnet, daß** als Koppelmittel eine von dem Aufsatzteil (3) nach außen abstehende Nase (16) in eine Ausnehmung (17) des Rohrs (10) eingreift.

## Claims

1. A dental cleaning apparatus (1), with a removable attachment (3) adapted to be attached to a handle portion (2), said attachment (3) accommodating an elongate cleaning tool (8) which is adapted to be set in rotation about its longitudinal axis (7), **characterized in that** provision is made for a user-related element as a tube (10), a sleeve or the like, which is adapted to be plugged onto the handle section (2) and coupled to the attachment (3).

2. The dental cleaning apparatus (1) according to claim 1, **characterized in that** said handle portion (2) and said element include detents operatively associated with each other.

3. The dental cleaning apparatus (1) according to claim 1 or 2, **characterized in that** said handle portion (2) includes a detent groove (13) suitable for engagement by an inwardly projecting pin of said element.

4. The dental cleaning apparatus (1) according to any one of the preceding claims, **characterized in that** said handle portion (2) and said attachment (3) include detents operatively associated with each other.

5. The dental cleaning apparatus (1) according to any one of the preceding claims, **characterized in that** said handle portion (2) includes a detent groove (14) suitable for engagement by an outwardly projecting pin (15) of the attachment (3).

6. The dental cleaning apparatus (1) according to any one of the preceding claims, **characterized in that** said element and said attachment (3) have coupling devices operatively associated with each other.

7. The dental cleaning apparatus (1) according to any one of the preceding claims, **characterized in that** said element includes a recess (17) into which an outwardly protruding nose (16) of the attachment (3) is introducible.

8. The dental cleaning apparatus (1) according to any one of the preceding claims, **characterized in that** said handle portion (2) includes a sleeve (9) made in particular of metal onto which said element and said attachment (3) are adapted to be plugged.

9. A removable attachment (3) for an in particular electrically powered dental cleaning apparatus (1), said attachment (3) being adapted to be attached to a handle portion (2) of the dental cleaning apparatus (1) and accommodating an elongate cleaning tool (8) adapted to be set in rotation about its longitudinal axis (7), in combination with a user-related element as a tube (10), a sleeve or the like, which is plugged onto the handle portion (2) and coupled to the attachment (3).

10. The attachment (3) according to patent claim 9, **characterized by** at least one or several features of the patent claims 2 to 8.

11. A method of removing a user-related element as a tube (10), a sleeve or the like of an in particular electrically powered dental cleaning apparatus (1), said element being adapted to be coupled to an attachment (3) and attached to a handle portion (2) of the dental cleaning apparatus (1), and said attachment (3) accommodating an elongate cleaning tool (8) adapted to be set in rotation about its longitudinal axis (7), **characterized in that** the process of detaching said element by a user automatically involves detachment of the attachment (3) by means of coupling devices.

12. The method according to patent claim 11, **characterized in that** the coupling device is implemented by a nose (16) projecting from the attachment (3) outwardly to engage in a recess (17) of the tube (10).

## Revendications

1. Appareil de nettoyage dentaire (1), avec une pièce rapportée (3) amovible, qui est enfichable sur une pièce préhensible (2), dans lequel un outil de nettoyage (8) allongé est logé dans la pièce rapportée (3) et peut être déplacé dans une rotation autour de son axe longitudinal (7), **caractérisé en ce qu'**un élément relatif à un utilisateur est prévu, comme un tube (10), un étui ou analogue qui est enfichable sur la pièce préhensible (2) et qui peut être accouplé à la pièce rapportée (3).

2. Appareil de nettoyage dentaire (1) selon la revendication 1, **caractérisé en ce que**, la pièce préhensible (2) et l'élément présentent des moyens d'encliquetage associés l'un à l'autre.

3. Appareil de nettoyage dentaire (1) selon la revendication 1 ou 2, **caractérisé en ce que** la pièce préhensible (2) présente une encoche d'encliquetage (13), dans laquelle peut être encliqueté un tenon de l'élément, lequel tenon se projette vers l'intérieur.

4. Appareil de nettoyage dentaire (1) selon l'une quelconque des revendications précédentes, **caractérisé en ce que** la pièce préhensible (2) et la pièce rapportée (3) présentent des moyens d'encliquetage associés l'un à l'autre.

5. Appareil de nettoyage dentaire (1) selon l'une quelconque des revendications précédentes, **caractérisé en ce que** la pièce préhensible (2) présente une encoche d'encliquetage (14) dans laquelle peut être encliqueté un tenon (15) de la pièce rapportée (3), lequel se projette vers l'extérieur.

6. Appareil de nettoyage dentaire (1) selon l'une quelconque des revendications précédentes, **caractérisé en ce que** l'élément et la pièce rapportée (3) présentent des moyens d'accouplement associés l'un à l'autre.

7. Appareil de nettoyage dentaire (1) selon l'une quelconque des revendications précédentes, **caractérisé en ce que** l'élément présente un évidement (17) dans lequel peut être introduit un nez (16) de la pièce rapportée (3), lequel se projette vers l'extérieur.

8. Appareil de nettoyage dentaire (1) selon l'une quelconque des revendications précédentes, **caractérisé en ce que** la pièce préhensible (2) présente un étui (9), qui est constitué en particulier de métal, sur lequel l'élément et la pièce rapportée (3) peuvent être enfichés.

9. Pièce rapportée amovible (3) pour un appareil de nettoyage dentaire (1) en particulier entraîné électriquement, la pièce rapportée (3) pouvant être enfichée sur une pièce préhensible (2) de l'appareil de nettoyage dentaire (1) et un outil de nettoyage (8) allongé étant logé dans la pièce rapportée (1), lequel peut être déplacé dans une rotation autour de son axe longitudinal (7), en association avec un élément relatif à un utilisateur, comme un tube (10), un étui ou analogue, qui est enfiché sur la pièce préhensible (2) et qui est accouplé à la pièce rapportée (3).

10. Pièce rapportée (3) selon la revendication 9, **caractérisée par** au moins une ou plusieurs des caractéristiques des revendications 2 à 8.

11. Procédé pour retirer un élément relatif à un utilisateur, comme un tube (10), un étui ou analogue, d'un appareil de nettoyage dentaire (1) en particulier entraîné électriquement, dans lequel l'élément peut être accouplé à une pièce rapportée (3) et lesquels sont enfichables sur une pièce préhensible (2) de l'appareil de nettoyage dentaire (1) et un outil de nettoyage (8) allongé est logé dans la pièce rapportée (3), lequel peut être déplacé dans une rotation autour de son axe longitudinal (7), **caractérisé en ce que**, lors du retrait de l'élément par un utilisateur à l'aide de moyens d'accouplement, la pièce rapportée (3) est également retirée automatiquement.

12. Procédé selon la revendication 11, **caractérisé en ce que**, un nez (16) se projetant vers l'extérieur à partir de la pièce rapportée (3), en tant que moyen d'accouplement ,s'engage dans un évidement (17) du tube (10).
